# EUROPÄISCHE PATENTSCHRIFT

(11) **EP 1 900 621 B1**
(45) Veröffentlichungstag und Bekanntmachung des Hinweises auf die Patenterteilung: **16.11.2016**
(21) Anmeldenummer: 07115305.0
(22) Anmeldetag: 30.08.2007
(51) Int. Cl.: B62D 55/275, B62D 55/28

(54) **Auswechselbares Verschleißpolster, sowie Verfahren zur Herstellung von Verschleißpolstern für eine Gleiskette**
Replaceable track pad and method for manufacturing track pads for a crawler
Coussin de roulement échangeable et procédé de fabrication de coussins de roulement pour chenilles

(30) Priorität: 13.09.2006 DE 102006043763
(43) Veröffentlichungstag der Anmeldung: 19.03.2008
(73) Patentinhaber: Wirtgen GmbH, 53578 Windhagen (DE)
(72) Erfinder: Busley, Peter, 53545 Linz/Rhein (DE); Tewes, Günter, 53572 Unkel/Rhein (DE)
(74) Vertreter: dompatent von Kreisler Selting Werner - Partnerschaft von Patent- und Rechtsanwälten mbB

(56) Entgegenhaltungen:
- JP-A- 9 301 233
- JP-A- 10 157 666
- JP-A- 2005 119 365

## Beschreibung

Die Erfindung betrifft ein auswechselbares Verschleißpolster für eine Gleiskette eines Kettenfahrzeugs, insbesondere für Baumaschinen nach dem Oberbegriff des Anspruchs 1.

Aus dem Stand der Technik (EP 0 994 013 A) sind auswechselbare Verschleißpolster für Gleisketten bekannt, die an einer Basisplatte der Gleiskette lösbar befestigt werden können.

Die Verschleißpolster enthalten beispielsweise zwei in Längsrichtung des Verschleißpolsters verlaufende Verstärkungsschienen, von denen zur Unterseite des Verschleißpolsters hin zwei Schraubgewinde von Befestigungsschrauben vorstehen. Die Befestigungsschrauben sind durch Löcher der Verstärkungsschienen hindurchgeführt und in geeigneter Weise gegen Verdrehen gesichert.

Bei der Herstellung dieser Verschleißpolster werden somit die Verstärkungsschienen mit an ihren Enden in entsprechende Löcher hindurchgesteckten Befestigungsschrauben von dem Verschleißpolstermaterial umgossen.

Nachteilig ist dabei, dass sich das Verschleißpolstermaterial beim Umgießen auch unter die Verstärkungsschiene setzt. Dies hat den Nachteil, dass sich die Verschraubungen mit der Basisplatte während des Betriebs aufgrund des weichen Polyurethanmaterials zwischen Verstärkungsschiene und Basisplatte wieder lösen, so dass die Schraubverbindungen regelmäßig nachgezogen werden müssen.

Die zwischen der Verstärkungsschiene und der Basisplatte befindliche Polyurethanlage verhindert nämlich, dass die Vorspannung der Schraubenverbindung dauerhaft aufrechterhalten bleiben kann. Es versteht sich, dass bei bis zu 50 Verschleißpolstern je Fahrwerk und bei vier Fahrwerken je Maschine der zeitliche Aufwand für das Nachspannen der Schraubverbindungen erheblich ist, so dass erhöhte Kosten und ein erhöhter Zeitbedarf entsteht.

Ein weiterer Nachteil der von dem Verschleißpolstern abstehenden Stehbolzen besteht darin, dass sie ein erhöhtes Transportvolumen verursachen, und dass das Gewinde der Stehbolzen beim Transport beschädigt werden kann.

Ein weiterer Nachteil der Verschleißpolster mit abstehenden Stehbolzen besteht darin, dass beim Vergießen darauf geachtet werden muss, dass das Gewinde des Stehbolzens während des Gießvorgangs vor der Benetzung mit dem Polyurethan geschützt werden muss.

Das Dokument JP 09301233 offenbart ein gattungsgemässes auswechselbares Verschleißpolster einer Gleiskette eines Kettenfahrzeugs, wobei die Gleiskette mehrere Basisplatten zum Aufnehmen eines Verschleißpolsters aufweist. Das Verschleißpolster ist lösbar an einer Basisplatte befestigbar. Das Verschleißpolster weist eine Lauffläche und eine der Lauffläche gegenüberliegende der Basisplatte zugewandte Unterseite auf, wobei an der Unterseite ein Verstärkungselement an dem Verschleißpolster angeklebt ist.

Der Erfindung liegt daher die Aufgabe zugrunde, ein Verschleißpolster für eine Gleiskette der eingangs genannten Art, sowie ein Verfahren zur Herstellung eines derartigen Verschleißpolsters zu schaffen, mit denen die Herstellung vereinfacht, und im Resultat die Herstellungskosten, die Wartungskosten, die Transportkosten und der Zeitaufwand verringert werden können.

Zur Lösung dieser Aufgabe die Merkmale des Anspruchs 1.

Die Erfindung sieht in vorteilhafter Weise vor, dass das Verstärkungselement des Verschleißpolsters mindestens zwei mit Abstand voneinander angeordnete Löcher aufweist, dass das Verschleißpolster Hohlräume oder Aussparungen aufweist, die koaxial zu den Löchern des Verstärkungselementes verlaufen und von der Unterseite her kommend oberhalb des Verstärkungselementes mit Abstand von diesem enden. Die Hohlräume oder Aussparungen dienen zur Aufnahme von Befestigungsmitteln, die in dem Verschleißpolster an dem Verstärkungselement befestigbar sind.

Bei der Herstellung werden die Verstärkungselemente mit vorstehenden Dornen einer Werkzeugform gehalten, indem die Dorne durch die in den Verstärkungselementen vorgesehenen Löchern zumindest teilweise hindurchtreten.

Das erfindungsgemäße Verschleißpolster weist keine vorstehenden Stehbolzen auf. Dadurch, dass keine Stehbolzen von den Verschleißpolstern abstehen, ist der Transport vereinfacht und das Transportvolumen erheblich reduziert. In dem von den Dornen der Werkzeugform gebildeten Hohlraum kann nach der Herstellung des Verschleißpolsters ein Befestigungsmittel an dem Verstärkungselement befestigt werden.

Dadurch, dass die Befestigungsmittel im montierten Zustand unmittelbar auf der Basisplatte aufliegen, kann ein Nachspannen der Schraubverbindung in regelmäßigen Abständen entfallen. Zumindest ist eine Inspektion der Schraubverbindungen nur nach Ablauf erheblich größerer Zeitintervalle erforderlich. Das unmittelbare Aufliegen des Anschlagbundes auf der Basisplatte schafft eine stabile Auflage, wobei gleichzeitig die Verstärkungselemente vollständig in dem Verschleißpolstermaterial eingebettet sind und sich dadurch auch bei hohen Scherkräften nicht von dem Verschleißpolster lösen.

Die nachträglich angebrachten Befestigungsmittel stehen vorzugsweise nicht gegenüber der Unterseite der Verschleißpolster über und schließen im wesentlichen bündig mit der Unterseite aus Verschleißpolstermaterial ab.

Es ist vorgesehen, dass das Verstärkungselement zumindest im Bereich der Löcher vorzugsweise parallel zur Lauffläche abgeflacht ist. Die Abflachung ist insbesondere dann von Vorteil, wenn als Befestigungsmittel Blindnietmuttern eingesetzt werden.

Das Verstärkungselement und/oder das Verschleißpolster kann eine Verdrehsicherung für das Befestigungsmittel aufweisen. Beispielsweise können die Löcher des Verstärkungselementes eine Querschnittsform aufweisen, die der Querschnittsform des Befestigungsmittels angepasst ist.

Vorzugsweise ist vorgesehen, dass die Löcher des Verstärkungselementes und/oder die Aussparungen des Verschleißpolsters eine an die Außenkontur der Befestigungsmittel angepasste Querschnittskontur aufweisen. Diese kann beispielsweise eine Sechskantkontur sein.

Die Aussparungen des Verschleißpolsters weisen vorzugsweise einen über die Länge der einzusetzenden Befestigungsmittel hinausgehenden Hohlraum auf. Dieser Hohlraum dient zur Aufnahme des freien Endes einer mit dem Befestigungsmittel des Verschleißpolsters zusammenwirkenden Befestigungsschraube.

Ein Anlagebund des Befestigungsmittels des Verschleißposters liegt einerseits auf der der Basisplatte zugewandten Seite des Verstärkungselementes an und andererseits auf der Basisplatte auf. Dies stellt sicher, dass sich kein Verschleißpolstermaterial zwischen dem Befestigungsmittel und der Basisplatte befindet.

Der Anlagebund kann auf der der Basisplatte zugewandten Seite des Verschleißpolsters im wesentlichen bündig mit der Unterseite des Verschleißpolsters abschließen.

Die Verstärkungselemente verlaufen quer zur Bewegungsrichtung des Verschleißpolsters im Betrieb. Dabei erstrecken sich die Verstärkungselemente in Längsrichtung des Verschleißpolsters.

Die Verstärkungselemente bestehen aus einem hochfesten Material, vorzugsweise aus Metall.

Das Verschleißpolster kann an der Unterseite quer zur Bewegungsrichtung verlaufende Vorsprünge aufweisen, die in einander angepasste Kanäle der Basisplatte eingreifen.

Dabei sind vorzugsweise die Verstärkungselemente in diese Vorsprünge integriert.

Die Vorsprünge können in ihrer Längsrichtung mindestens zwei in die Verschleißpolster hineinragende Aussparungen aufweisen, die einen Freiraum für Befestigungsmittel der Basisplatte im montierten Zustand des Verschleißpolsters bilden. Beispielsweise können Schraubköpfe von Schraubmitteln zur Befestigung der Basisplatte an der Gleiskette in diese Aussparungen hineinragen.

Das Anordnen der Befestigungsmittel für die Basisplatte in an der Unterseite der Verschleißpolster vorgesehenen Aussparungen hat den Vorteil, dass die Lauffläche keine Durchgangsbohrungen für die Befestigungsmittel der Basisplatten aufweist und somit einen erhöhten Verschleißwiderstand bieten kann, wobei zusätzlich der Vorteil entsteht, dass keine von der Lauffläche her zugänglichen Befestigungsmittel vorhanden sind, die in Betrieb verschmutzen können, so dass deren Zugänglichkeit beeinträchtigt ist.

Die Aussparungen für die Befestigungsmittel der Basisplatte können bis an die Verstärkungselemente angrenzen.

Außerdem können sich die Aussparungen für die Befestigungsmittel der Basisplatte über die gesamte Breite der Vorsprünge erstrecken.

Jedes der in die Verschleißpolster integrierten Verstärkungselemente kann einstückig in mindestens zwei Ebenen verlaufen, und zwar im Bereich der Aussparungen für die Befestigungsmittel in einer der Unterseite der Verschleißpolster nahen Ebene und im Bereich der Aussparungen der Vorsprünge in einer in das Innere des Verschleißpolsters zurückversetzten Ebene. Beide Ebenen verlaufen vorzugsweise parallel zur Lauffläche.

Der Zwischenraum zwischen den Vorsprüngen in Längsrichtung des Verschleißpolsters nimmt mit enger Passung einen zentralen Steg der Basispatte zum Zentrieren des Verschleißpolsters auf der Basisplatte auf. Dies bedeutet, dass der Zwischenraum in Verbindung mit dem zentralen Steg einen eindeutigen Sitz des Verschleißpolsters vorgibt. Selbstverständlich kann die Basisplatte mehrere Stege aufweisen, allerdings besteht nur zwischen dem zentralen Steg und dem Zwischenraum zwischen den Vorsprüngen eine enge Passung.

Das Verschleißpolster kann zumindest zur Außenseite der Gleiskette hin gegenüber der Basisplatte überstehen. Auf diese Weise wird die Basisplatte einerseits gegen Beschädigungen geschützt und andererseits auch Beschädigungen z.B. von Bordsteinkanten durch die Basisplatten verhindert.

Das Material des Verschleißpolsters besteht aus einem Elastomer, vorzugsweise aus einem Polyurethan.

Das Material des Verschleißpolsters ist nach einem besonders bevorzugten Ausführungsbeispiel mit einer hellen Leuchtfarbe, vorzugsweise Signalgelb, durchgefärbt.

Die Befestigungsmittel in den Aussparungen des Verschleißpolsters bestehen vorzugsweise aus Blindnietmuttern. Die Blindnietmuttern bilden nach dem Nietvorgang einen verformten Ringwulst, der sich auf der der Lauffläche zugewandten Seite des Verstärkungselementes unmittelbar abstützt. In Verbindung mit dem Anlagebund wird somit eine feste Verbindung zwischen der Blindnietmutter und dem Verstärkungselement erzeugt, bei dem kein Verschleißpolstermaterial die Festigkeit der Verbindung schwächt.

Alternativ kann das Befestigungsmittel in den Aussparungen des Verschleißpolsters aus Einsatzmuttern bestehen, wobei dann die Löcher des Verstärkungselementes aus Gewindelöchern bestehen und die Einsatzmuttern in die Gewindelöcher der Verstärkungselemente einschraubbar sind. Die Einsatzmuttern können im Falle von Löchern auch ein selbstschneidendes oder selbstfurchendes Außengewinde aufweisen.

Die Erfindung betrifft auch eine Gleiskette für Kettenfahrzeuge, insbesondere für Baumaschinen, mit mehreren Basisplatten und mit auswechselbaren, auf die Basisplatten aufschraubbaren Verschleißpolstern mit den vorgenannten Merkmalen. Im folgenden werden unter Bezugnahme auf die Zeichnungen Ausführungsbeispiele der Erfindung näher erläutert.

Es zeigen:
- Fig. 1: eine Gleiskette mit Verschleißpolstern in perspektivischer Ansicht,
- Fig. 2: eine perspektivische Darstellung eines Verschleißpolsters mit einer Basisplatte der Gleiskette,
- Fig. 3: ein Schnitt in Querrichtung einer Zusammenstellung des Verschleißpolsters mit der Basisplatte,
- Fig. 4a: den Dorn einer Werkzeugform mit aufgesetztem Verstärkungselement,
- Fig. 4b: ein weiteres Ausführungsbeispiel für einen Dorn der Werkzeugform,
- Fig. 4c: den Dorn gemäß Fig. 4b mit aufgesetzter elastischer Ringhülse,
- Fig. 4d: ein weiteres Ausführungsbeispiel eines Dorns für eine Einsatzmutter,
- Fig. 5: eine Einschraubmutter, und
- Fig. 6: eine Teilansicht der Aussparungen in den Vorsprüngen des Verschleißpolsters.

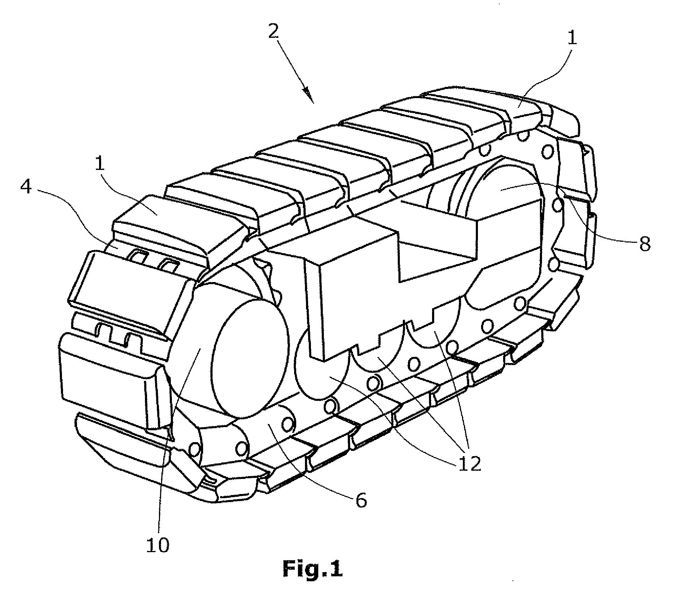

Fig. 1 zeigt ein Ausführungsbeispiel einer Gleiskette 2, die auf auswechselbaren Verschleißpolstern 1 abläuft. Derartige Gleisketten werden in den Fahrwerken eines Kettenfahrzeugs, z.B. einer Straßenbaumaschine benötigt. Die Verschleißpolster 1 sind auf Basisplatten 4 lösbar befestigt, wobei die Basisplatten ihrerseits an Kettengliedern 6 der endlos umlaufenden Gleiskette 2 befestigt sind. Die Gleiskette 2 läuft mit ihren Kettengliedern 6 um zwei Umlenkrollen 8 und 10 um, von denen eine angetrieben ist. Im unteren Trum der Gleiskette 2 sind mehrere Stützrollen 12 angeordnet, die das Maschinengewicht tragen und auf den Kettengliedern ablaufen.

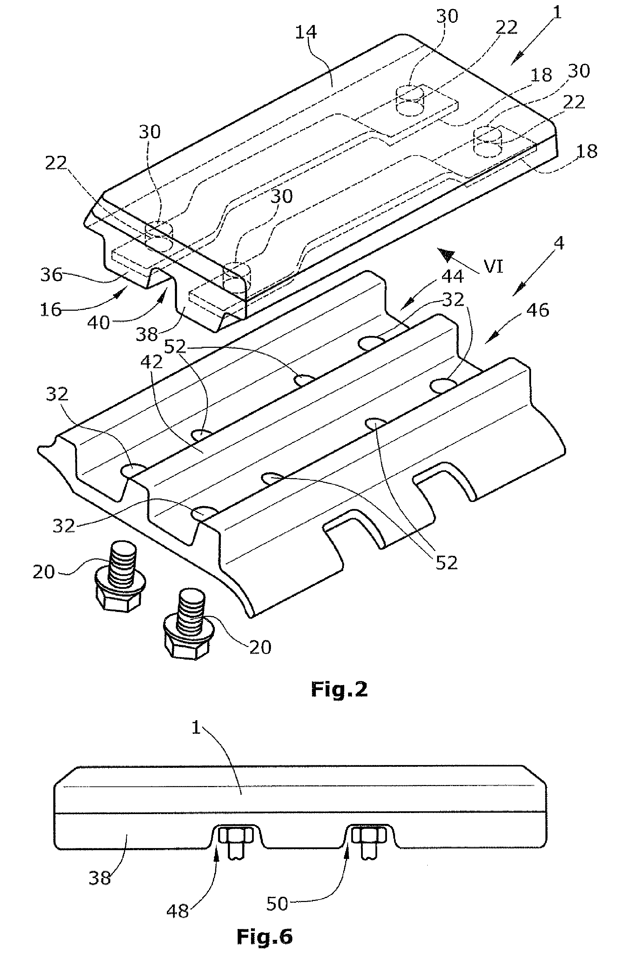

Fig. 2 zeigt das Verschleißpolster 1 in perspektivischer Ansicht mit der darunterliegenden Basisplatte 4 und zwei der insgesamt vier Befestigungsschrauben 20 zum Befestigen des auswechselbaren Verschleißpolsters 1 auf der Basisplatte 4.

Das Verschleißpolster 1 besteht vorzugsweise aus einem Elastomermaterial, z.B. Polyurethan, das nach einem besonders bevorzugten Ausführungsbeispiel mit einer hellen Leuchtfarbe, vorzugsweise Signalgelb durchgefärbt ist.

Das Verschleißpolster 1 weist eingegossene Verstärkungselemente 18 auf, die vorzugsweise in Längsrichtung des Verschleißpolsters 1 verlaufen. In dem Ausführungsbeispiel sind zwei derartige Verstärkungselemente 18 mit seitlichem Abstand voneinander in dem Verschleißpolster 1 angeordnet. In der Nähe ihrer freien Enden sind die Verstärkungselemente 18 mit Löchern 22 versehen, mit deren Hilfe nach der Herstellung der Verschleißpolster 1 Befestigungsmittel 26 in den Löchern verankert werden können.

Die Verschleißpolster 1 haben auf ihrer Außenseite eine Lauffläche 14, sowie eine der Basisplatte 4 zugewandte Unterseite 16.

Oberhalb der Löcher 22 erstrecken sich Aussparungen 30 in Richtung auf die Lauffläche 14, die zur Aufnahme von Befestigungsmitteln dienen. Die Aussparungen 30 verlaufen koaxial zu den Löchern 22 des Verstärkungselementes 18. Diese Aussparungen 30 sind den einzusetzenden Befestigungsmitteln angepasst. Die Befestigungsmittel können aus Blindnietmuttern 26 oder Einsatzmuttern 28 bestehen, wobei die Einsatzmuttern 28 sowohl ein Innengewinde als auch ein Außengewinde aufweisen. Die Befestigungsmittel 26,28 sind geeignet von der Unterseite 16 des Verschleißpolsters her einschraubbare Befestigungsschrauben 20 aufzunehmen, wie in Fig. 2 angedeutet. Hierzu weisen die Basisplatten 4 geeignete Durchgangsbohrungen 32 auf, die koaxial zu den Befestigungsmitteln 26,28 und den Löchern 22 des Verschleißpolsters 1 verlaufen. Wesentlich ist dabei, dass die Befestigungsmittel 26,28 im montierten Zustand der Verschleißpolster 1 auf der Basisplatte 4 unmittelbar aufliegen.

Die zwei Verstärkungselemente 18 in dem Verschleißpolster 1 verlaufen in dem Ausführungsbeispiel in an der Unterseite 16 des Verschleißpolsters 1 abstehenden zueinander parallelen Vorsprüngen 36,38, die zwischen sich einen Zwischenraum 40 freilassen. Der Zwischenraum 40 zwischen den Vorsprüngen 36,38 kooperiert mit einem Mittelsteg 42 der Basisplatte 4 derart, dass der Mittelsteg 42 einen Sitz für den Zwischenraum 40 zwischen den Vorsprüngen 36,38 bildet und der Mittelsteg 42 der Basisplatte 4 das Verschleißpolster 1 im wesentlichen spielfrei auf der Gleiskette 2 zentrieren kann. Zwischen dem Mittelsteg 42 und dem Zwischenraum 40 kann eine enge Passung gewählt werden, damit das Verschleißpolster 1 im wesentlichen spielfrei auf der Basisplatte 4 aufsitzt.

Die Vorsprünge 36,38 liegen in Kanälen 44,46 auf der Basisplatte 4 und können sich dort abstützen. Die Außenflanken der Vorsprünge 36,38 haben jedoch mit den äußeren Seitenflanken der Kanäle 44,46 ein ausreichendes Spiel, so dass lediglich der Zentralsteg 42 der Basisplatte 4 eine Zentrierung des Verschleißpolster 1 vornimmt. Die sich in Längsrichtung des Verschleißpolsters 1 erstreckenden Vorsprünge 36,38 werden durch zwei querverlaufende Aussparungen 48,50 unterbrochen, die einen Freiraum für Schraubköpfe von Befestigungsmitteln schaffen, die die Basisplatte 4 durch die Durchgangslöcher 52 hindurch mit den Kettengliedern 6 verbinden. Diese Befestigungsmittel sind daher wie am besten aus Fig. 6 entnehmbar durch das Verschleißpolster 1 im montierten Zustand verdeckt und werden nicht mit Straßenmaterial zugesetzt oder beschädigt.

Wie in Fig. 2 ersichtlich, verlaufen die streifenförmigen Verstärkungselemente 18 im Bereich der Aussparungen 48,50 in einer zur Lauffläche 14 parallel versetzten Ebene.

In Längsrichtung des Verschleißpolsters 1 steht dieses auf der Außenseite der Gleiskette 2 gegenüber der Basisplatte 4 vor. Dadurch werden beispielsweise Bordsteinkanten vor den metallischen Basisplatten 4 geschützt und andererseits auch die Basisplatten 4 vor Beschädigungen geschützt.

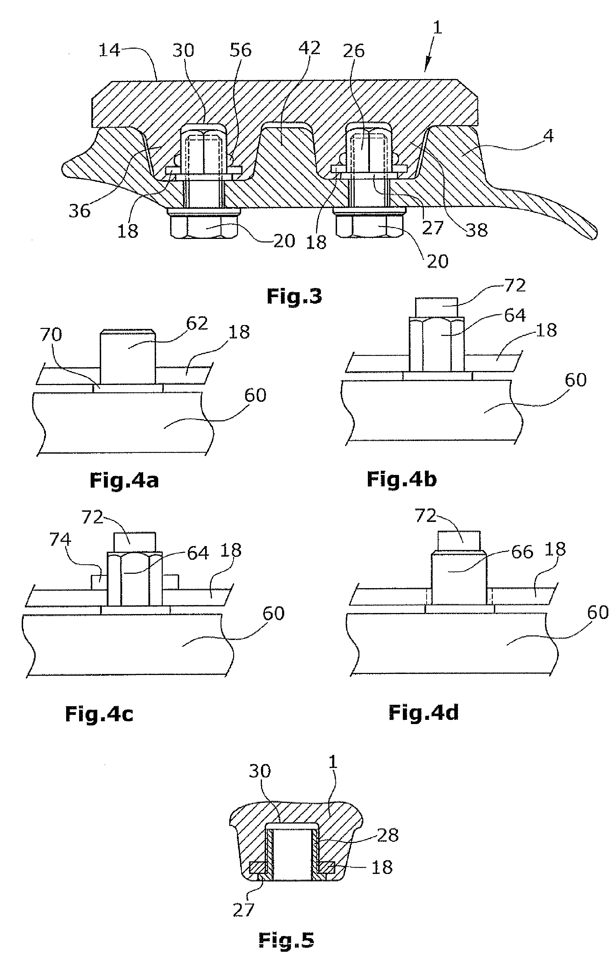

Fig. 3 zeigt das auf der Basisplatte 4 montierte Verschleißpolster 1 in einer durch die Achsen der Löcher 22 hindurchgehenden Ebene. In den Aussparungen 30 des Verschleißpolster 1 befinden sich Blindnietmuttern 26, die an den Verstärkungselementen 18 in den Löchern 22 durch Ausformung eines durch den Nietvorgang sich ausbildenden Ringwulstes 56 fest an den Verstärkungselementen 18 befestigt sind. Die Blindnietmuttern 26 liegen vorzugsweise mit einem Anlagebund 27 auf der Basisplatte 4 auf.

Die Fign. 4a bis 4d zeigen verschiedene Möglichkeiten, die Aussparungen 30 zur Aufnahme von Befestigungsmitteln 26,28 auszugestalten. In den Fign. 4a bis 4d ist zunächst ein Teil der Werkzeugform 60 ersichtlich, von der ein Dorn 62,64 bzw. 66 absteht. Die Werkzeugform 60 weist bei einem Verschleißpolster 1 gemäß Fig. 2 vier solcher Dorne 62,64,66 auf. Die Verstärkungselemente 18 werden mit ihren Löchern 22 auf die Dorne 62,64,66 aufgesetzt, wobei die Verstärkungselemente 18 auf einem Ringbund 70 aufliegen, der in seiner Form dem Anschlagbund 27 der Blindnietmutter 26 oder der Einsatzmutter 28 angepasst ist. In dem Ausführungsbeispiel der Fig. 4a ist der Dorn 62 kreiszylindrisch.

Bei dem Ausführungsbeispiel der Fig. 4b ist der Dorn 64 im Querschnitt sechskantförmig und kann in einem sechskantförmigen Loch 22 des Verstärkungselementes 18 eingesetzt sein. Der Dorn 64 ist um einen beispielsweise zylindrischen Ansatz 72 verlängert, der über die Länge einer Blindnietmutter 26 oder einer Einsatzmutter 28 hinausgeht. Dies schafft einen zusätzlichen Freiraum für das freie Ende einer Befestigungsschraube 20. Der Ansatz 72 kann alternativ auch eine andere Querschnittsform aufweisen.

Bei dem Ausführungsbeispiel der Fig. 4c ist gegenüber dem Ausführungsbeispiel der Fig. 4b zusätzlich eine Ringhülse 74 aus einem elastischen Material, z.B. Moosgummi, aufgesetzt. Diese elastische Hülse 74, die auf dem Verstärkungselement 18 direkt aufsitzt, bildet nach Fertigstellung des Verschleißpolsters 1 eine weiche Ringzone, auf der der Lauffläche 14 zugewandten Seite der Verstärkungselemente 18 derart, dass der sich durch den Blindnietvorgang ausbildende Ringwulst 56 der Blindnietmutter 26 bei seiner Verformung nicht behindert wird.

Alternativ ist es auch möglich, z.B. bei Verwendung eines zylindrischen Dorns gemäß Fig. 4a das Verschleißpolster 1 nachzubearbeiten und in dem Bereich hinter dem Loch 22 eine Ringnut für den Ringwulst 56 einer Blindnietmutter 26 freizustechen.

Fig. 5 zeigt die Verwendung einer Einsatzmutter 28 als Befestigungsmittel. Die Einsatzmutter 28 ist mit einem Außen- und einem Innengewinde versehen, so dass die Einsatzmutter 28 in die Löcher 22 eines Verstärkungselementes 18 eingeschraubt werden kann, wenn die Löcher 22 als Gewindelöcher ausgebildet sind. Alternativ kann die Einsatzmutter ein selbstschneidendes oder selbstfurchendes Außengewinde aufweisen, das beim Einschrauben in die Löcher 22 selbst ein Gewinde in den Löchern 22 herstellt.

## Patentansprüche

1. Auswechselbares Verschleißpolster (1) einer Gleiskette (2) eines Kettenfahrzeugs, insbesondere für Baumaschinen, wobei die Gleiskette (2) mehrere Basisplatten (4) zum Aufnehmen eines Verschleißpolsters (1) aufweist, wobei
- das Verschleißpolster (1) an einer Basisplatte (4) lösbar befestigbar ist,
- das Verschleißpolster (1) eine Lauffläche (14) und eine der Lauffläche (14) gegenüberliegende der Basisplatte (4) zugewandte Unterseite (16) aufweist,
- das Verschleißpolster vorzugsweise mindestens ein sich in Längsrichtung des Verschleißpolsters (1) erstreckendes Verstärkungselement (18) enthält,
- das Verschleißpolster (1) Hohlräume (30) aufweist, die koaxial zu den Löchern (22) des Verstärkungselementes (18) verlaufen und von der Unterseite (16) her kommend oberhalb des Verstärkungselementes (18) mit Abstand von diesem enden,
- dass die Hohlräume (30) des Verschleißpolsters (1) zur Aufnahme von Befestigungsmitteln (26,28) dienen, die in dem Verschleißpolster (1) an dem Verstärkungselement (18) befestigbar sind, wobei das Verstärkungselement (18) mindestens zwei in Längsrichtung mit Abstand voneinander angeordnete Löcher (22) aufweist, **dadurch gekennzeichnet, dass** das Verstärkungselement (18) von dem Verschleißpolstermaterial umgossen ist,
- dass ein Anlagebund (27) der Befestigungsmittel (26,28) auf der der Basisplatte (4) zugewandten Seite des von dem Verschleißpolstermaterial umgossenen Verstärkungselementes (18) im wesentlichen bündig mit der Unterseite (16) aus Verschleißpolstermaterial abschließt und im montierten Zustand auf der Basisplatte (4) aufliegt, so dass sich kein Verschleißpolstermaterial zwischen den Befestigungsmitteln (26,28) und der Basisplatte (4) befindet, wobei das Befestigungsmittel geeignet ist, von der Unterseite her einschraubbare Befestigungsschrauben (20) aufzunehmen.

2. Auswechselbares Verschleißpolster (1) nach Anspruch 1, **dadurch gekennzeichnet, dass** das Verstärkungselement (18) zumindest im Bereich der Löcher (22) vorzugsweise parallel zur Lauffläche (14) abgeflacht ist.

3. Auswechselbares Verschleißpolster (1) nach Anspruch 1 oder 2, **dadurch gekennzeichnet, dass** das Verstärkungselement (18) und/oder das Verschleißpolster (1) eine Verdrehsicherung für das Befestigungsmittel (26,28) aufweist.

4. Auswechselbares Verschleißpolster (1) nach einem der Ansprüche 1 bis 3, **dadurch gekennzeichnet, dass** die Löcher (22) des Verstärkungselementes (18) und die Hohlräume (30) des Verschleißpolsters (1) eine an die Außenkontur der Befestigungsmittel (26,28) angepasste Querschnittskontur aufweisen.

5. Auswechselbares Verschleißpolster (1) nach einem der Ansprüche 1 bis 4, **dadurch gekennzeichnet, dass** die Aussparungen (30) des Verschleißpolsters (1) einen über die Länge der einzusetzenden Befestigungsmittel (26,28) hinausgehenden Hohlraum zur Aufnahme des freien Endes der mit dem Befestigungsmittel (26) zusammenwirkenden Befestigungsschraube (20) aufweisen.

6. Auswechselbares Verschleißpolster (1) nach einem der Ansprüche 1 bis 5, **dadurch gekennzeichnet, dass** die Verstärkungselemente (18) quer zur Bewegungsrichtung des Verschleißpolsters (1) im Betrieb verlaufen.

7. Auswechselbares Verschleißpolster (1) nach einem der Ansprüche 1 bis 6, **dadurch gekennzeichnet, dass** die Verstärkungselemente (18) aus hochfestem Material, vorzugsweise Metall, bestehen.

8. Auswechselbares Verschleißpolster (1) nach einem der Ansprüche 1 bis 7, **dadurch gekennzeichnet, dass** das Verschleißpolster (1) an der Unterseite (16) quer zur Bewegungsrichtung verlaufende Vorsprünge (36,38) aufweist, die in einander angepasste Kanäle (44,46) der Basisplatte (4) eingreifen.

9. Auswechselbares Verschleißpolster (1) nach Anspruch 8, **dadurch gekennzeichnet, dass** die Verstärkungselemente (18) in die Vorsprünge (36,38) integriert sind.

10. Auswechselbares Verschleißpolster (1) nach einem der Ansprüche 8 oder 9, **dadurch gekennzeichnet, dass** die Vorsprünge (36,38) in Längsrichtung mindestens zwei in die Verschleißpolster (1) hineinragende Aussparungen (48,50) aufweisen, die einen Freiraum für Befestigungsmittel der Basisplatte (4) im montierten Zustand des Verschleißpolsters (1) bilden.

11. Auswechselbares Verschleißpolster (1) nach einem der Ansprüche 1 bis 10, **dadurch gekennzeichnet, dass** jedes der in die Verschleißpolster (1) integrierten Verstärkungselemente (18) einstückig in mindestens zwei Ebenen verläuft, und zwar im Bereich der Aussparungen (30) für die Befestigungsmittel in einer der Unterseite des Verschleißpolsters (1) nahen Ebene und im Bereich der Aussparungen (48,50) der Vorsprünge (36,38) in einer in das Innere des Verschleißpolsters (1) zurückversetzten Ebene.

12. Auswechselbares Verschleißpolster (1) nach einem der Ansprüche 8 bis 11, **dadurch gekennzeichnet, dass** der Zwischenraum (40) zwischen den Vorsprüngen (36,38) in Längsrichtung des Verschleißpolsters (1) einen zentralen Steg (42) der Basisplatte (4) zum Zentrieren des Verschleißpolsters (1) auf der Basisplatte (4) mit enger Passung aufnimmt.

13. Auswechselbares Verschleißpolster (1) nach einem der Ansprüche 1 bis 12, **dadurch gekennzeichnet, dass** das Verschleißpolster (1) zumindest zur Außenseite der Gleiskette (2) hin gegenüber der Basisplatte (4) übersteht.

14. Auswechselbares Verschleißpolster (1) nach einem der Ansprüche 1 bis 13, **dadurch gekennzeichnet, dass** das Material des Verschleißpolsters (1) aus einem Elastomer, vorzugsweise aus einem Polyurethan, besteht.

15. Auswechselbares Verschleißpolster (1) nach einem der Ansprüche 1 bis 14, **dadurch gekennzeichnet, dass** das Material des Verschleißpolsters (1) mit einer hellen Leuchtfarbe, vorzugsweise Signalgelb, durchgefärbt ist.

16. Auswechselbares Verschleißpolster (1) nach einem der Ansprüche 1 bis 15, **dadurch gekennzeichnet, dass** die Befestigungsmittel in den Aussparungen des Verschleißpolsters (1) aus Blindnietmuttern (26) bestehen.

17. Auswechselbares Verschleißpolster (1) nach Anspruch 16, **dadurch gekennzeichnet, dass** die Blindnietmutter (26) bei dem Nietvorgang einen nach außen geformten Ringwulst (56) bildet, der sich auf der der Lauffläche (14) zugewandten Seite des Verstärkungselementes (18) unmittelbar abstützt.

18. Auswechselbares Verschleißpolster (1) nach einem der Ansprüche 1 bis 16, **dadurch gekennzeichnet, dass** die Löcher in den Verstärkungselementen (18) mit einem Gewinde versehen sind und dass die Befestigungsmittel in den Aussparungen des Verschleißpolsters (1) aus Einsatzmuttern (28) bestehen, die in das Gewinde der Löcher (22) des Verstärkungselementes (18) einschraubbar sind.

19. Gleiskette für Kettenfahrzeuge, insbesondere für Baumaschinen, mit mehreren Basisplatten (4) und mit auswechselbaren, auf die Basisplatten (4) aufschraubbaren Verschleißpolstern (1) nach einem der Ansprüche 1 bis 18.

## Claims

1. A replaceable wear pad (1) for a crawler track (2) of a tracked vehicle,
in particular for construction machinery, where the crawler track (2) comprises a plurality of base plates (4) for accommodating a wear pad (1), wherein
- the wear pad (1) is adapted to be fastened to the base plate (4) in a detachable manner,
- the wear pad (1) comprises a tread (14), as well as a bottom side (16) arranged opposite to the tread (14) and facing the base plate (4),
- the wear pad preferably comprises at least one reinforcing element (18) extending in the longitudinal direction of the wear pad (1),
- the wear pad (1) comprises recesses (30) that extend coaxially to the holes (22) of the reinforcing element (18) and, coming from the bottom side (16), end above the reinforcing element (18) and at a distance to the same,
- the recesses (30) of the wear pad (1) serve the purpose of accommodating fastening devices (26,28) adapted to be fastened to the reinforcing element (18) in the wear pad (1),
- the reinforcing element (18) comprises at least two holes (22) arranged at a distance to one another in the longitudinal direction, **characterized in**
- **that** the reinforcing element (18) is molded-in by the wear pad material,
- **that** a bearing collar (27) of the fastening device (26,28) is arranged on that side of the reinforcing element (18) molded-in by the wear pad material which faces the base plate (4), wherein the bearing collar terminates essentially flush with the bottom side (16) of the wear pad material and rests on the base plate (4) in the mounted condition so that no wear pad material is arranged between the fastening device (26,28) and the base plate (4), the fastening device being adapted to receive retaining screws (20) that can be screwed into place from the bottom side (16).

2. The replaceable wear pad (1) in accordance with claim 1, **characterized in that** the reinforcing element (18) is flattened, at least in the area of the holes (22), preferably parallel to the tread (14).

3. The replaceable wear pad (1) in accordance with claim 1 or 2, **characterized in that** the reinforcing element (18) and/or the wear pad (1) comprise an anti-twist protection for the fastening device (26,28).

4. The replaceable wear pad (1) in accordance with any one of claims 1 to 3, **characterized in that** the holes (22) of the reinforcing element (18) and the recesses (30) of the wear pad (1) have a cross-sectional contour adapted to the outside contour of the fastening devices (26,28).

5. The replaceable wear pad (1) in accordance with any one of claims 1 to 4, **characterized in that** the recesses (30) of the wear pad (1) comprise a cavity extending beyond the length of the fastening devices (26,28) that are to be inserted and serving the purpose of accommodating the free end of the retaining screw (20) interacting with the fastening device (26).

6. The replaceable wear pad (1) in accordance with any one of claims 1 to 5, **characterized in that** the reinforcing elements (18) extend transversely to the moving direction of the wear pad (1) in operation.

7. The replaceable wear pad (1) in accordance with any one of claims 1 to 6, **characterized in that** the reinforcing elements (18) are made of a high-strength material, preferably of metal.

8. The replaceable wear pad (1) in accordance with any one of claims 1 to 7, **characterized in that** the wear pad (1) comprises projections (36,38) on the bottom side (16) that extend transversely to the moving direction, the projections engaging into mutually adapted channels (44,46) of the base plate (4).

9. The replaceable wear pad (1) in accordance with claim 8, **characterized in that** the reinforcing elements (18) are integrated into the projections (36,38).

10. The replaceable wear pad (1) in accordance with any one of claims 8 or 9, **characterized in that** the projections (36,38) comprise, in the longitudinal direction, at least two recesses (48,50) extending into the wear pads (1), the recesses forming a space for fastening devices of the base plate (4) in mounted condition of the wear pad (1).

11. The replaceable wear pad (1) in accordance with any one of claims 1 to 10, **characterized in that** each of the reinforcing elements (18) integrated into the wear pads (1) consists of one piece and extends in at least two planes, namely in a plane close to the bottom side of the wear pad (1) in the area of the recesses (30) for the fastening devices, and in a plane set back into the interior of the wear pad (1) in the area of the recesses (48,50) of the projections (36,38).

12. The replaceable wear pad (1) in accordance with any one of claims 8 to 11, **characterized in that** the space (40) between the projections (36,38) in the longitudinal direction of the wear pad (1) accommodates, with narrow fit, a central stud (42) of the base plate (4) for centering the wear pad (1) on the base plate (4).

13. The replaceable wear pad (1) in accordance with any one of claims 1 to 12, **characterized in that** the wear pad (1) projects relative to the base plate (4) at least towards the outer side of the crawler track (2).

14. The replaceable wear pad (1) in accordance with any one of claims 1 to 13, **characterized in that** the material of the wear pad (1) consists of an elastomer, and preferably of a polyurethane.

15. The replaceable wear pad (1) in accordance with any one of claims 1 to 14, **characterized in that** the material of the wear pad (1) is through-colored with a light luminescent color, preferably Signal Yellow.

16. The replaceable wear pad (1) in accordance with any one of claims 1 to 15, **characterized in that** the fastening devices in the recesses of the wear pad (1) consist of blind rivet nuts (26).

17. The replaceable wear pad (1) in accordance with claim 16, **characterized in that**, during the riveting operation, the blind rivet nut (26) forms an annular bead (56) that is shaped towards an outside, the annular bead resting immediately on that side of the reinforcing element (18) that faces the tread (14).

18. The replaceable wear pad (1) in accordance with any one of claims 1 to 16, **characterized in that** the holes in the reinforcing elements (18) are provided with a thread, and that the fastening devices in the recesses of the wear pad (1) consist of insert nuts (28) that are suitable for screwing into the thread of the holes (22) of the reinforcing element (18).

19. A crawler track for tracked vehicles, in particular for construction machinery, comprising a plurality of base plates (4), and comprising replaceable wear pads (1), suitable for bolting onto the base plates (4), in accordance with any one of claims 1 to 18.

## Revendications

1. Patin d'usure remplaçable (1) d'une chenille (2) d'un engin à chenilles, en particulier d'un engin de construction, la chenille (2) comportant une pluralité de plaques de base (4) destinées à recevoir un patin d'usure (1),
- le patin d'usure (1) pouvant être fixé de manière amovible à une plaque de base (4),
- le patin d'usure (1) comportant une surface de roulement (14) et un côté inférieur (16) opposée à la surface de roulement (14) et tournée vers la plaque de base (4),
- le patin d'usure contenant de préférence au moins un élément de renforcement (18) qui s'étend dans la direction longitudinale du patin d'usure (1),
- le patin d'usure (1) comportant des cavités (30) qui s'étendent coaxialement aux trous (22) de l'élément de renforcement (18) et qui se terminent au-dessus de l'élément de renforcement (18) à une distance de celui-ci depuis le côté inférieur (16),
- les cavités (30) du patin d'usure (1) servant à recevoir des moyens de fixation (26, 28) qui peuvent être fixés à l'élément de renforcement (18) dans la plaque d'usure (1), l'élément de renforcement (18) comportant au moins deux trous (22) espacés longitudinalement,
**caractérisé en ce que** l'élément de renforcement (18) est entouré par coulage par la matière formant le patin d'usure,
- un collet d'appui (27) des moyens de fixation (26,28) se termine, du côté, dirigé vers la plaque de base (4), de l'élément de renforcement (18) entouré la matière formant le patin d'usure, sensiblement à fleur par le côté inférieur (16) en matière de patin d'usure et est en appui à l'état monté sur la plaque de base (4) de sorte qu'aucune matière de patin d'usure entre les moyens de fixation (26, 28) et la plaque de base (4), le moyen de fixation étant adapté pour recevoir des vis de fixation (20) pouvant être vissées depuis le côté inférieur (16).

2. Patin d'usure remplaçable (1) selon la revendication 1, **caractérisé en ce que** l'élément de renforcement (18) est aplati au moins dans la région des trous (22), de préférence parallèlement à la surface de roulement (14).

3. Patin d'usure remplaçable (1) selon la revendication 1 ou 2, **caractérisé en ce que** l'élément de renforcement (18) et/ou le patin d'usure (1) comporte une protection anti-rotation destinée au moyen de fixation (26, 28).

4. Patin d'usure remplaçable (1) selon l'une des revendications 1 à 3, **caractérisé en ce que** les trous (22) de l'élément de renforcement (18) et les cavités (30) du patin d'usure (1) présentent un contour en coupe transversale adaptée au contour extérieur des moyens de fixation (26, 28).

5. Patin d'usure remplaçable (1) selon l'une des revendications 1 à 4, **caractérisé en ce que** les cavités (30) du patin d'usure (1) comportent une cavité qui s'étend au-delà de la longueur des moyens de fixation (26, 28) à utiliser et qui est destinée à recevoir l'extrémité libre de la vis de fixation (20) coopérant avec le moyen de fixation (26).

6. Patin d'usure remplaçable (1) selon l'une des revendications 1 à 5, **caractérisé en ce que** le au moins un élément de renforcement (18) s'étend en fonctionnement transversalement à la direction de déplacement du patin d'usure (1).

7. Patin d'usure remplaçable (1) selon l'une des revendications 1 à 6, **caractérisé en ce que** le au moins un élément de renforcement (18) est constitué d'une matière à haute résistance, de préférence un métal.

8. Patin d'usure remplaçable (1) selon l'une des revendications 1 à 7, **caractérisée en ce que** le patin d'usure (1) comporte du côté inférieure (16) des saillies (36, 38) qui s'étendent transversalement à la direction de déplacement et qui s'engagent par complémentarité de forme dans des canaux (44, 46) pratiqués dans la plaque de base (4).

9. Patin d'usure remplaçable (1) selon la revendication 8, **caractérisé en ce que** le au moins un élément de renforcement (18) est intégré dans les saillies (36, 38).

10. Patin d'usure remplaçable (1) selon l'une des revendications 8 ou 9, **caractérisé en ce que** les saillies (36, 38) comportent dans la direction longitudinale, au moins deux évidements (48, 50), qui sont ménagés dans le patin d'usure (1) et qui forment un dégagement pour les moyens de fixation de la plaque de base (4) à l'état monté du patin d'usure (1).

11. Patin d'usure remplaçable (1) selon l'une des revendications 1 à 10, **caractérisé en ce que** chacun des éléments de renforcement (18), intégrés dans la plaque d'usure (1), s'étend d'une seule pièce dans au moins deux plans, à savoir dans la région des évidements (30) destinés aux moyens de fixation dans un plan près du côté inférieur du patin d'usure (1) et dans la région des évidements (48, 50) des saillies (36, 38) dans un plan en retrait à l'intérieur du patin d'usure (1).

12. Patin d'usure remplaçable (1) selon l'une des revendications 8 à 11, **caractérisé en ce que** l'espace intermédiaire (40) entre les saillies (36, 38) reçoit avec un ajustement serré, dans la direction longitudinale du patin d'usure (1), une nervure centrale (42) de la plaque de base (4) destinée au centrage du patin d'usure (1) sur la plaque de base (4).

13. Patin d'usure remplaçable (1) selon l'une des revendications 1 à 12, **caractérisé en ce que** le patin d'usure (1) fait saillie au moins en direction du côté extérieur de la chenille (2) par rapport à la plaque de base (4).

14. Patin d'usure remplaçable (1) selon l'une des revendications 1 à 13, **caractérisé en ce que** le patin d'usure (1) est en élastomère, de préférence en polyuréthanne.

15. Patin d'usure remplaçable (1) selon l'une des revendications 1 à 14, **caractérisé en ce que** le matériau de du patin d'usure (1) est coloré avec une couleur fluorescente claire, de préférence jaune de sécurité.

16. Patin d'usure remplaçable (1) selon l'une des revendications 1 à 15, **caractérisé en ce que** les moyens de fixation dans les évidements du patin d'usure (1) sont constitués par des écrous à rivets borgnes (26).

17. Patin d'usure remplaçable (1) selon la revendication 16, **caractérisé en ce que** l'écrou à rivet borgne (26) forme dans le procédé de rivetage un bourrelet annulaire (56) moulé vers l'extérieur qui s'appuie directement sur le côté de l'élément de renfort (18) qui est dirigé vers la surface de roulement (14).

18. Patin d'usure remplaçable (1) selon l'une des revendications 1 à 16, **caractérisé en ce que** les trous dans les éléments de renforcement (18) sont pourvus d'un filetage et **en ce que** les moyens de fixation dans les évidements du patin d'usure (1) sont constitués d'écrous à insertion (28) qui peuvent être vissés dans le filetage des trous (22) de l'élément de renforcement (18).

19. Chenille pour engins à chenilles, en particulier pour engins de construction, comportant une pluralité de plaques de base (4) et de patins d'usure remplaçables (1), pouvant être vissés sur les plaques de base (4), selon l'une des revendications 1 à 18.
